# EUROPEAN PATENT SPECIFICATION

(11) **EP 4 403 846 B1**
(45) Date of publication and mention of the grant of the patent: **09.07.2025**
(21) Application number: 24152044.4
(22) Date of filing: 16.01.2024
(51) Int. Cl.: F24S 25/613, F24S 25/615

(54) **ANCHORING BRACKET**
VERANKERUNGSHALTER
SUPPORT D'ANCRAGE

(30) Priority: 19.01.2023 IT 202300000756
(43) Date of publication of application: 24.07.2024
(73) Proprietor: Grondal S.r.l. Unipersonale, 46043 Frazione Gozzolina, MN (IT)
(72) Inventor: ENGHEBEN, Giuseppe, 46043 Frazione Gozzolina, MN (IT)
(74) Representative: Chimini, Francesco

(56) References cited:
- WO-A1-2018/134653
- DE-U1- 202008 007 662
- GB-A- 2 462 490

## Description

The present invention relates to an anchoring bracket for a roofing particularly suitable, in the construction industry, for attaching a guide, or an anchoring device, to the roofing on which an installation is then mounted.

The present invention also relates to a support group, a mechanical machining group, a pressing method for making the anchoring bracket, and the method for attaching the guide, or anchoring device, to the roofing.

The term "roofing" is intended to refer to both industrial and civil/residential construction. In particular, "roofing" may mean the roof of a building or the roofing of an interior space (e.g., attic, loft, etc.).

As is well known, these days it is becoming increasingly common to install photovoltaic systems for obtaining clean energy or solar thermal systems for heating water. It is also required that gangways or other installations such as air conditioning or other equipment are installed on roofings, especially in the case of industrial construction.

There are numerous fastening systems on the market, for example, for photovoltaic systems and installations of various kinds to be applied to corrugated roofing. It is known to the person skilled in the art that the phrase "corrugated roofing" means roofing made with at least one pair of corrugated sheets.

Currently, the fastening systems consist of guides that are fastened to the roofing using screws, and, on these guides, supports of various configurations are then secured to which the anchoring elements of the photovoltaic panels are finally engaged.

Other systems involve plates that are fastened, again by screws, to the roofing to which guides are then applied to accommodate supports and anchoring devices for panel structures.

Still other systems involve the attaching of pipes to the roofing to which bearings are fastened on which plates are then positioned to which supports are applied for the subsequent engagement of the panels. Also in this case, the pipes are engaged to the underlying structure by screws.

All the systems illustrated above, as well as many others used, make use of a variety of guides, brackets, profiles, supports, and more, but the systems are all characterized by a single common denominator, which is the drilling of corrugated sheets, metal sheets, and/or other materials used for the roofing.

The problem that makes the systems illustrated above unreliable and ineffective over time is due to the multiple holes that are made in the corrugated roofing sheets for anchoring the various fastening systems of the panels. The high number of punctures causes water infiltration phenomena that are difficult to resolve and may cause damage to the underlying structures if not discovered in time.

To prevent water infiltration, the systems previously mentioned provide for gaskets, which may be made of rubber, sponge, neoprene, or be silicone-based gaskets, which, however, over time, are subject to cracking, crazing, splitting and drying due to harsh winter temperatures and high summer temperatures. As an example, it should be noted that in the summer period, with radiation temperatures of 30-32°C, a metal sheet may reach 65-75°C; as a result, elastomeric materials loose sealing capacity because they soften considerably and, at the same time, dry out, reducing their insulating function. In winter, on the other hand, low temperatures stiffen elastomeric materials to the point that gaskets often crystallize and, following storms, wind, and/or stress, crack and crumble, leaving screw holes unprotected and uninsulated. Furthermore, changing seasons and weathering cause wear and tear on the gaskets, which gradually begin to allow moisture and water to seep in, which, within a short time, causes considerable damage not only to the roofing but also to the underlying structures.

In addition to that what has been explained so far, when an operator decides to remove solar panels from the roof because they have reached the end of their operational life or decides to replace them because they are damaged, for example due to a heavy hailstorm, the roofing has to be completely redone as it is full of holes that may not be used for a new system or new panels, since it is not possible for the screws inserted in the fastening holes to adequately tighten the structure, and thus it is not possible to ensure the tightness and stability of both the structure and the system.

These situations involve considerable operation and maintenance costs in addition to the fact that the infiltration is difficult to resolve without dismantling the system that triggered it.

Among the various ways of fastening panels, gasket riveting systems are also used, but these have shown poor reliability and limited security, as rivets tend to move as a result of stress from rain and wind, as well as temperature changes. Over time, the rivet movements tend to wear out the gaskets and as a result trigger water infiltration phenomena.

The systems outlined above, while yielding results, do not ensure tightness over time; moreover, each panel installation provides for its own fastening system, and the holes in the roofing may never be reused.

As previously mentioned, in recent times, there has been a need to also install other structures on roofings, for example, gangways, scaffolding or the like, which may also be temporary installations or used for short periods during maintenance, inspection or other operations; therefore, the anchors to the underlying structure must not puncture and thus ruin the roofing sheets.

A possible solution to the above-mentioned problems has been disclosed in EP3571449A1 (WO20181346531A1), filed by the same Applicant, where an anchoring bracket consists of an L-shaped profile provided with a folded edge at the free end, while at the opposite end there is a molded sector to be interposed between the pair of corrugated sheets. The molded sector comprises a fastening hole that may be engaged by the screws already provided for the mutual fastening of the sheets.

Disadvantageously, the folded edge of the free end at least partially covers the fastening hole and thus makes the operations to couple the bracket to the corrugated sheets complicated.

The object of the present invention is substantially to solve the problems of the prior art by overcoming the above-described difficulties by means of an anchoring bracket that allows the roofing's corrugated sheets not to be pierced.

A second object of the present invention is to construct an anchoring bracket capable of being used on both new and existing roofing.

Another object of the present invention is to provide an anchoring bracket that may adapt to any type of corrugated sheet on the market.

Another object of the present invention is to provide an anchoring bracket that has a limited footprint and is easily and smoothly assembled and disassembled even by unskilled personnel without losing its functional and practical features.

A further object of the present invention derives from being able to have an anchoring bracket that allows for high operational accuracy and significant infiltration sealing security.

Finally, an object of the present invention is to make an anchoring bracket of simple construction and good functionality.

These objects and others, which will become more apparent in the course of the present description, are substantially achieved by an anchoring bracket, a support group, a mechanical machining group, a pressing method, and a method for fastening the guide (or anchoring device) to the roofing, as claimed hereinafter.

Further features and advantages will become more apparent from the detailed description of an anchoring bracket, a support group, a mechanical machining group, a pressing method, and a fastening method, according to the present invention, made hereinafter with reference to the attached drawings, provided for illustrative purposes only and therefore not limiting, wherein:
- Fig. 1 is a perspective view of an anchoring bracket that is the subject of the present invention;
- Fig. 2 is a side view of the anchoring bracket in Fig. 1;
- Fig. 3 is a side view, shown schematically, of a support group that is the subject of the present invention;
- Fig. 4 is a perspective view of the support group;

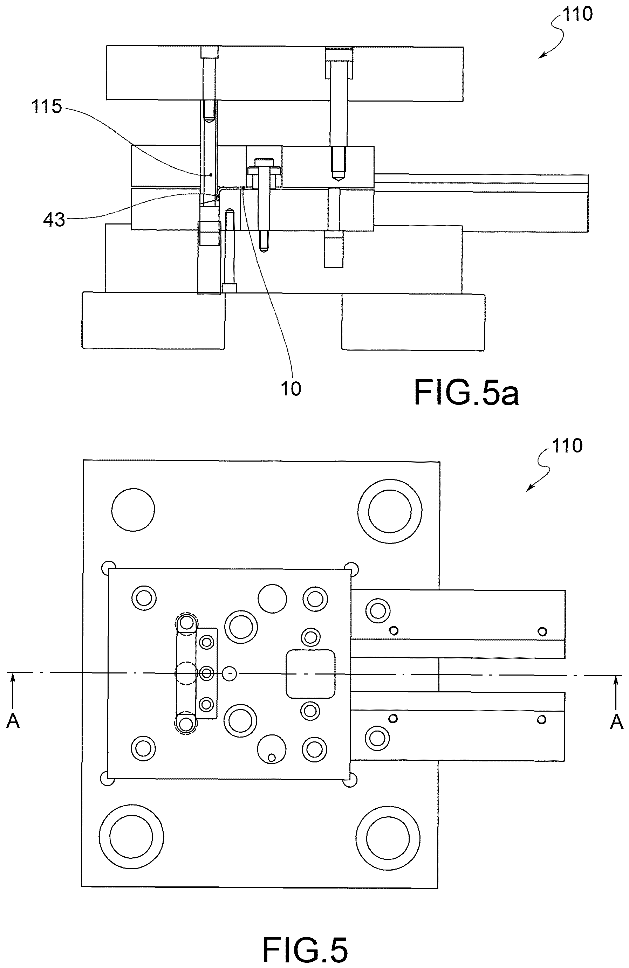

- Fig. 5 is a plan view from above of a cutting and bending station;
- Fig. 5a is a cross-sectional view of the cutting and bending station obtained along the line A-A indicated in Fig. 5;
- Fig. 6 is a plan view from above of a deformation unit;
- Fig. 6a is a side view of the deformation unit in Fig. 6;
- Fig. 6b is a cross-sectional view of the deformation unit obtained along the B-B line indicated in Fig. 6;
- Fig. 7 is a perspective view of a metal sheet bent at one free end to obtain an orthogonally folded edge;
- Fig. 8 is a perspective view of the metal sheet after passing through a first station, wherein it was deformed in such a way as to obtain a pilot bend and to give an overturned "L" shape to an installation engaging portion;
- Fig. 9 is a perspective view of the support group, where a guide is fastened to the anchoring bracket, and
- Fig. 10 is a perspective view of the support group, where an installation is fastened to the guide.

In the following description, elements common to the various embodiments represented in the drawings are indicated with the same reference numerals.

In said drawings, the reference numeral 1 indicates an anchoring bracket according to the invention as a whole.

In the invention, the anchoring bracket 1 for a roofing 2 comprises a sheet engaging portion 3, an installation engaging portion 4, and a connecting portion 5.

The sheet engaging portion 3 is suitable for being interposed between a pair of corrugated sheets 21, 22. Furthermore, this sheet engaging portion 3 is suitable for being coupled and fastened to a first sheet 21 and a second sheet 22 of the aforesaid pair of corrugated sheets 21, 22. In particular, the coupling and fastening of the sheet engaging portion 3 to the first 21 and second 22 sheets may be achieved by a mechanical connection and/or shape coupling and/or force coupling. The mechanical connection is either removable, as in the case of bolting, or non-removable, as in the case of welding or bonding.

The installation engaging portion 4 is configured as a support suitable for fastening a guide 9 or an anchoring device. Examples of guides and anchoring devices are beams, profiles, pipes and the like.

An installation 90, such as a photovoltaic system, an air conditioning system, a solar thermal system, a gangway, a scaffolding or any structure installable on the roofing 2, is mountable on the guide 9 (or on the anchoring device).

The connecting portion 5 connects the sheet engaging portion 3 to the installation engaging portion 4; preferably, the connection between the connecting portion 5 and the sheet engaging portions 3 and the installation engaging portions 4 is seamless.

The connecting portion 5 is folded to form a housing pocket 50 suitable for accommodating an end portion 20 of the first 21 or second 22 sheet.

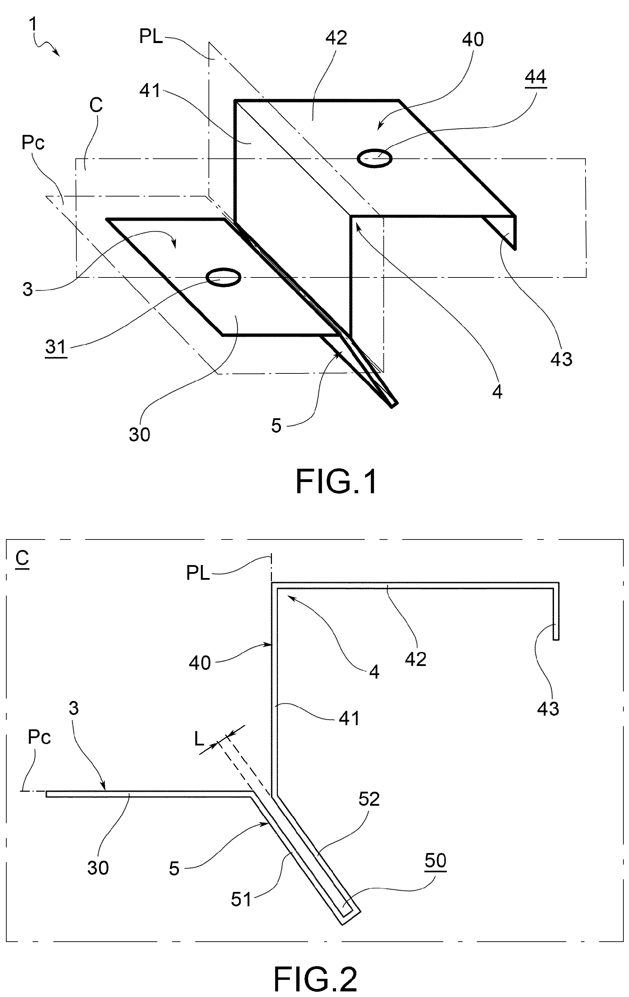

Preferably, the anchoring bracket 1 is made from a metal sheet that has been appropriately punched and deformed to obtain the final shape of the anchoring bracket. Therefore, the connecting portion 5 is obtained by folding the metal sheet so that it forms a pair of walls 51, 52 facing each other that define the housing pocket 50 (Fig. 2).

In accordance with an embodiment illustrated in the attached Fig. 2, the housing pocket 50 has a pocket width L that is such to allow the insertion with clearance of the end portion 20 of the first 21 or second 22 sheet into such housing pocket 50.

Preferably, the pocket width L is between 0.5 and 25 mm.

It should be noted that the pocket width L represents the maximum distance separating the pair of walls 51, 52 from each other and is measured orthogonally with respect to a development direction of the depth of the housing pocket 50.

According to the embodiment depicted in Fig. 1, the sheet engaging portion 3 comprises a plate-like element 30 connected to the connecting portion 5 and lying on a roofing coupling plane Pc.

Such a plate-like element 30 is suitable for being interposed between the first 21 and second 22 sheets so that, by inserting the anchoring bracket 1 between the pair of corrugated sheets 21, 22, the weight of the overlying first sheet 21 limits the movement of the anchoring bracket 1 with respect to the underlying second sheet 22.

For the purposes of this discussion, the terms "overlying", "underlying" and derivatives thereof are intended to refer to the anchoring bracket 1 in its condition of use.

Preferably, rather than limiting, the weight of the overlying first sheet 21 locks and holds the anchoring bracket 1 in place.

In particular, the end portion 20 of the overlying first sheet 21 is insertable into the housing pocket 50.

In an embodiment not shown in the figures, the sheet engaging portion 3 also comprises an inclined element connected to the plate-like element 30. The inclination of the aforesaid inclined element is such to conform the sheet engaging portion 3 to the shape of the pair of corrugated sheets 21, 22 whereby the sheet engaging portion 3 may be interposed with shape coupling between the pair of corrugated sheets 21, 22. In other words, the geometry of the plate-like element 30 and the inclined element follow the shape of the pair of corrugated sheets 21, 22 to allow the interposition of the sheet engaging portion 3 between the first 21 and the second 22 sheet.

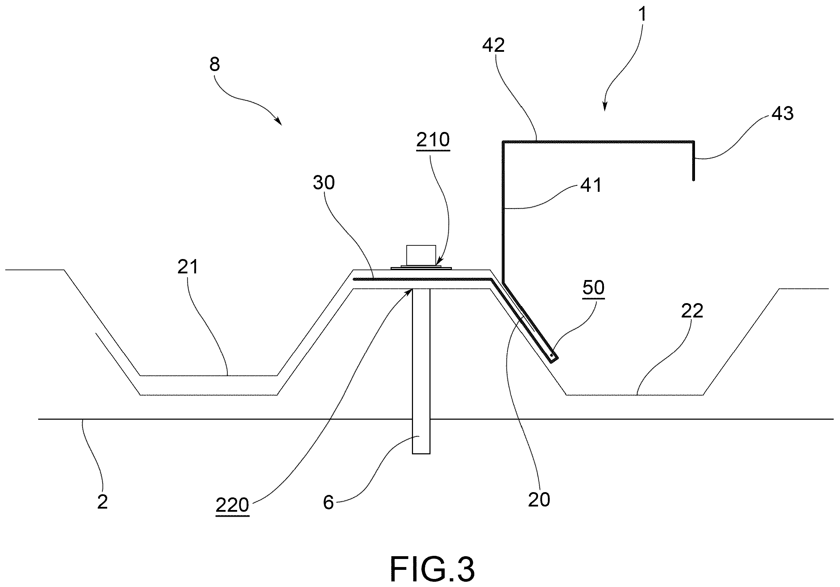

According to the embodiment shown in the attached Fig. 1 and 3, a sheet engaging hole 31 is obtained on the sheet engaging portion 3. When the anchoring bracket 1 is inserted between the pair of corrugated sheets 21, 22, this sheet engaging hole 31 is suitable for being coaxially aligned with a first coupling hole 210 and a second coupling hole 220 obtained in the first 21 and second 22 sheets, respectively. The anchoring bracket 1 is suitable for being secured to the pair of corrugated sheets 21, 22 by at least one screw 6 engageable with the sheet engaging hole 31 and with said first 210 and second 220 coupling holes.

Preferably, the sheet engaging hole 31 is obtained on the sheet element 30.

In accordance with the embodiment depicted in the attached Fig. 2 and 3, the sheet engaging portion 3 and the connecting portion 5 form a trapezoidal profile. In particular, the connecting portion 5 coincides with an inclined section, and the sheet engaging portion 3 coincides with a horizontal section of the trapezoidal profile.

In the present case, the connecting portion 5 lies on an inclined plane, and the housing pocket 50 defines the aforesaid inclined section. Therefore, the development direction of the depth of the housing pocket 50 also lies on said inclined plane. On the other hand, the horizontal section of the trapezoidal profile coincides with the plate-like element 30 lying on the roofing coupling plane Pc.

The trapezoidal profile is visible by observing the anchoring bracket 1 from the side, or by sectioning the sheet engaging portion 3 and the connecting portion 5 along a shear plane C orthogonal to the roofing coupling plane Pc.

Furthermore, the trapezoidal profile is suitable for defining a shape coupling with the pair of corrugated sheets 21, 22. In other words, the trapezoidal profile is counter-shaped to the pair of corrugated sheets 21, 22 to be interposed therebetween where the first sheet 21 overlaps the second sheet 22 (Fig. 3).

According to the embodiment shown in the attached Fig. 1, the installation engaging portion 4 comprises a support element 40 in an overturned "L" shape. Said support element 40 comprises a first arm 41 connected to the connecting portion 5, and a second arm 42 orthogonally connected to said first arm 41 so as to be arranged parallel to the sheet engaging portion 3.

Preferably, the first arm 41 lies on a reach plane PL orthogonal to both the shear plane C and the roofing coupling plane Pc. Therefore, the reach plane PL, the roofing coupling plane PC and the shear plane C form a triplet of Cartesian planes orthogonal to each other, and the anchoring bracket 1 is oriented in space along the aforesaid triplet of Cartesian planes.

In particular, the second arm 42 extends on the opposite side with respect to the sheet engaging portion 3; therefore, the second arm 42 does not cover the sheet engaging portion 3, i.e., there is no overlap between the second arm 42 and the sheet engaging portion 3.

Furthermore, this second arm 42 is configured as a fastening plate for the guide 9 or the anchoring device on which the installation 90 is mountable.

Preferably, the second arm 42 is parallel to the roofing coupling plane Pc where the plate-like element 30 lies.

In one embodiment, the sheet engaging portion 3 comprises the plate-like element 30, the installation engaging portion 4 comprises the support element 40, and the connecting portion 5 comprises the pair of walls 51, 52 facing each other.

According to the embodiment depicted in accordance with the attached Fig. 1-3, the installation engaging portion 4 comprises at the free end an edge 43 orthogonally folded to stiffen the anchoring bracket 1 and promote the grip of said anchoring bracket 1 by an operator.

Preferably, this edge 43 is obtained at the free end of the second arm 42 and is bent so as to lie parallel to the first arm 41, i.e., the reach plane PL. Furthermore, the edge 43 is bent toward the connecting portion 5.

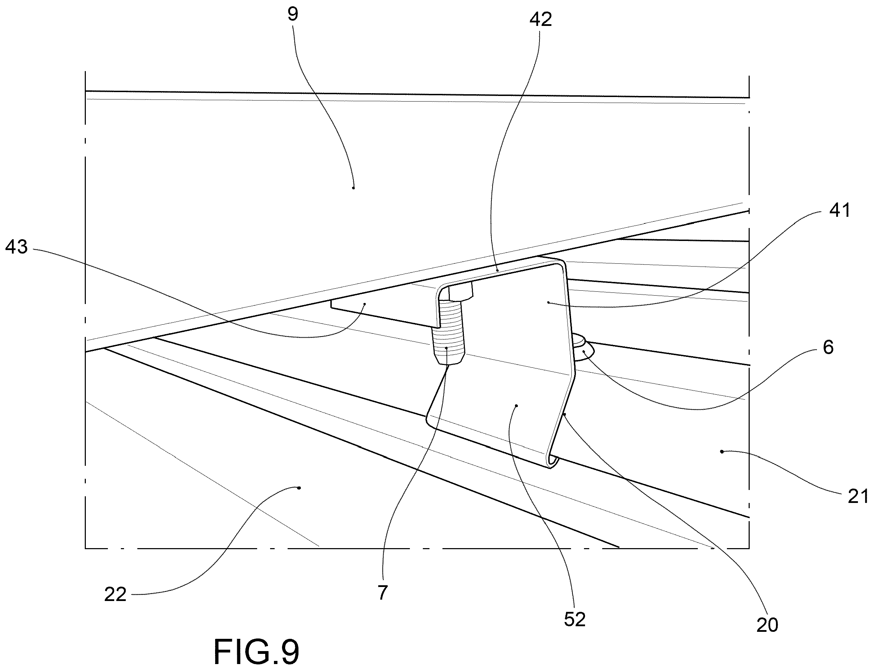

In accordance with an embodiment illustrated in the attached Fig. 1 and 9, an installation engaging hole 44 is obtained on the installation engaging portion 4, suitable for being engageable by a clamping screw 7 for fastening either the guide 9 or the anchoring device on which the installation 90 is mountable, to the bracket 1.

Preferably, the installation engaging hole 44 is located on the second arm 42.

In the present case, the anchoring bracket 1 is usable with any corrugated sheet configuration and made with profiles of metal material, preferably sheet metal. These profiles vary in thickness depending on the type of roofing 2 and/or the load to be supported by the anchoring bracket 1.

Preferably, the housing pocket 50 is substantially lying on the inclined plane to conform to the inclination of the end portion 20 of the first 21 or second sheet 22 to be inserted inside the housing pocket 50.

In one embodiment, the anchoring bracket 1 is painted in any color to adapt aesthetically or blend in with the roofing 2 or the installation 90 to be supported.

Preferably, the anchoring bracket 1 is made in one piece, i.e., it is not made by joining several parts coupled together by welding/bonding.

Alternatively, the anchoring bracket 1 is obtained as a single piece, i.e., obtained by joining a plurality of pieces seamlessly coupled together. For example, the plurality of pieces may comprise a plurality of metal sheet portions that are welded or bonded together so as to obtain the anchoring bracket 1.

In accordance with the present invention, a support group 8 comprising the pair of corrugated sheets 21, 22, the anchoring bracket 1 and at least one screw 6 is also disclosed. This screw 6 is engaged to the sheet engaging hole 31 obtained on the sheet engaging portion 3, to the first coupling hole 210 obtained on the first sheet 21, and to the second coupling hole 220 obtained on the second sheet 22.

According to a further aspect of the present invention, an installation assembly comprising the support group 8 and the guide 9 or the anchoring device is also disclosed on which the installation 90 may be mounted.

In accordance with the present invention, a mechanical machining group is also proposed for making the anchoring bracket 1. This mechanical machining group comprises a cutting and bending station 110 and a deformation unit 120.

The cutting and bending station 110 is suitable for cutting a metal sheet 10 having a main extension along a longitudinal axis L, so as to obtain a desired longitudinal length. Furthermore, the cutting and bending station 110 comprises a deformation punch 115 suitable for bending a free end of the metal sheet 10, so as to obtain the edge 43 orthogonally folded with respect to the longitudinal axis L.

Preferably, the width of the metal sheet 10 is measured along a transverse axis T orthogonal to the longitudinal axis L, and this width is already coincident with the final width of the anchoring bracket 1.

The deformation unit 120 is suitable for giving the metal sheet 10 the final shape of the anchoring bracket 1; furthermore, the deformation unit 120 in turn comprises a first station 121, a second station 122, and a third station 123.

The first station 121 comprises a first die 131, a counter-flange 125, and a first punch 141.

The first die 131 is suitable for acting as a support for the metal sheet 10, while the counter-flange 125 is suitable for acting as an abutment surface for the folded edge 43. In particular, when the metal sheet 10 is resting on the first die 131, the edge 43 abuts against the counter-flange 125, so that the deformation of the metal sheet 10 by the first punch 141 may then be carried out.

The first punch 141 is shaped to deform the metal sheet 10 so as to obtain a pilot bend 50' in a connecting portion 5. Preferably, the pilot bend 50' is either "V" or "U" shaped.

The shape of the first punch 141 is suitable for simultaneously bending also the installation engaging portion 4 so as to define the first arm 41 and the second arm 42 and give said installation engaging portion 4 an overturned "L" shape.

The second station 122 comprises a second punch 142 suitable for accentuating the pilot bend 50' to obtain a semi-machined pocket defined by the pair of walls 51, 52 facing each other.

Preferably, the second station 122 also comprises a second die 132 complementary to the second punch 142.

The third station 123 comprises a third punch 143 suitable for compressing the semi-machined pocket so as to obtain the housing pocket 50. In particular, the distance between the pair of walls 51, 52 is such that the housing pocket 50 is suitable for accommodating the end portion 20 of the first sheet 21 or the second sheet 22.

Preferably, the third station 123 also comprises a third die 133 complementary to the third punch 143.

For the purposes of this discussion, the adjective "final" is intended to refer to the geometric shape of the anchoring bracket 1 in conditions of use.

Preferably, in the anchoring bracket 1 the pair of walls 51, 52 are substantially parallel (Fig. 2), or they are flared and form a flaring angle with a maximum width of 40°. In this case, the flaring angle is the convex angle measured between a first wall 51 and a second wall 52 of said pair of walls 51, 52.

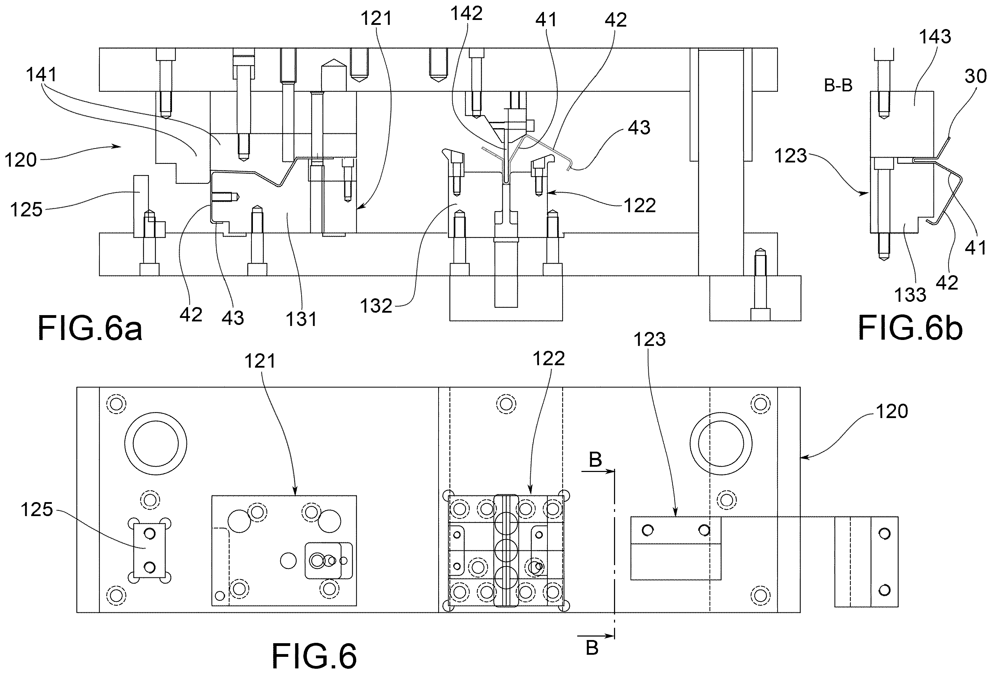

According to the embodiment shown in the attached Fig. 6-6a, the first station 121, the second station 122 and the third station 123 of the deformation unit 120 are placed sequentially next to each other, so that the same operator may monitor the plastic deformation process to give the metal sheet 10 the final shape of the anchoring bracket 1.

Preferably, the cutting and bending station 110 and the deformation unit 120 are engaged and made integral with each other. In other words, the mechanical machining group is a machining island that allows for the finished product, i.e., the anchoring bracket 1, to be obtained from the metal sheet 10.

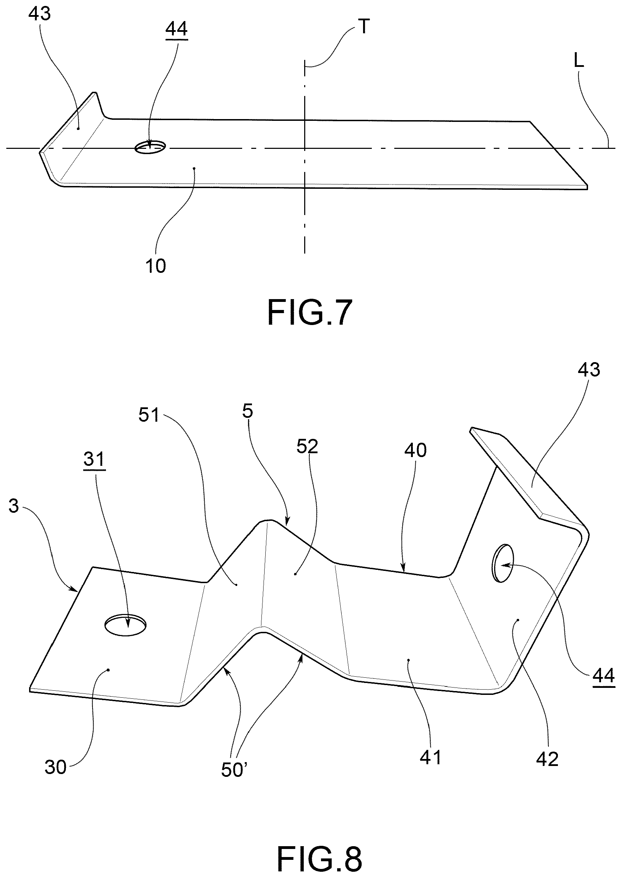

A pressing method for making the anchoring bracket 1 is also the subject matter of the present invention. The operation of this pressing method comprises the steps of:
- providing a mechanical machining group;
- providing a metal sheet 10 having a main extension along the longitudinal axis L and having a transverse width, measured along the transverse axis T orthogonal to the longitudinal axis L, coinciding with the final width of the anchoring bracket 1;
- cutting the metal sheet 10 so as to obtain a desired longitudinal length, and bending a free end of the metal sheet 10 so as to obtain the edge 43 orthogonally folded with respect to the longitudinal axis L (Fig. 7);
- deforming the metal sheet 10 in such a way as to obtain a pilot bend 50' in the connecting portion 5 and a simultaneous bend in the installation engaging portion 4 so as to define the first arm 41 and the second arm 42 and to give the installation engaging portion 4 an overturned "L" shape (Fig. 8);
- further deforming the pilot bend 50' so as to accentuate the bend thereof and obtain a semi-machined pocket defined by the pair of walls 51, 52 facing each other;
- compressing the semi-machined pocket so as to obtain the housing pocket 50, wherein the distance between the pair of walls 51, 52 is such as to make the housing pocket 50 suitable for accommodating the end portion 20 of the first sheet 21 or the second sheet 22.

In accordance with one aspect of the invention, a method for fastening a guide 9 or anchoring device to the roofing 2 is also disclosed. This fastening method comprises the steps of:
- providing the support group 8, wherein the first sheet 21 and the second sheet 22 of the pair of corrugated sheets 21, 22 are at least partially overlapping each other;
- inserting the anchoring bracket 1 between the first 21 and second 22 sheets, i.e., interposing the anchoring bracket 1 in the overlap area of the pair of corrugated sheets 21, 22, wherein the first sheet 21 overlaps the second sheet 22;
- fastening the anchoring bracket 1 to the pair of corrugated sheets 21, 22 by at least one screw 6 engaged with the sheet engaging hole 31 and with the first coupling hole 210 and the second coupling hole 220;
- fastening the guide 9, or the anchoring device, to the installation engaging portion 4 (Fig. 9). In particular, the guide 9 is fastened to the second arm 42 of the support element 40.

In particular, the screw 6, in addition to engaging the sheet engaging hole 31, also uses the first 210 and second 220 coupling holes, i.e., the same holes that are already used for the mutual fastening between the first 21 and second 22 sheets. In other words, the first 210 and the second 220 coupling holes are already provided to fasten the pair of corrugated sheets 21, 22 together and are also used to fix the anchoring bracket 1 to the roofing 2. In this case, the screw 6 may be the same screw that is already used to secure the first 21 and second 22 sheets together.

Preferably, for executing the fastening method, the guide 9 or anchoring device should also be provided.

In accordance with an embodiment of the fastening method, a step of mounting the installation 90 on the guide 9 or the anchoring device is provided. For example, the installation 90 is a photovoltaic system, an air conditioning system, a solar thermal system, a gangway, a scaffolding or any structure installable on the roofing 2.

Preferably, for the execution of the fastening method, the installation 90 should also be provided.

Innovatively, the anchoring bracket, the support group, the mechanical machining group, the pressing method and the fastening method fulfill their intended objects.

Advantageously, the anchoring bracket in question allows not to drill holes in the roofing, as the holes already provided are used to join and bind the pair of corrugated sheets together. Therefore, all the problems to the underlying structure from water infiltration and deterioration of the sheets due to the holes required to anchor the guide on which the installation is then mounted are avoided.

Advantageously, the anchoring bracket may be used on both new and existing roofings and is able to adapt to any type of trapezoidal roofing on the market.

Another advantage of the anchoring bracket according to the present invention is that it has a small footprint, may be easily and smoothly assembled and disassembled even by unskilled operators without losing its functional and practical features, and is able to be absolutely operable in an efficient way from the moment of its installation.

In addition to what has been described so far, the anchoring bracket offers high operational accuracy and considerable security for that which is anchored thereon.

In particular, the structure of the anchoring bracket allows it to be shaped in accordance with all types of corrugated sheet profiles on the market.

A further advantage provided by the anchoring bracket in question derives from the fact that it does not require periodic inspections or maintenance resulting in considerable savings in the construction of roofings, photovoltaic systems and other installations both fixed and temporary that may be present on a roofing.

Furthermore, the anchoring bracket is extremely flexible and may be easily moved so that the positioning of the installation on the roofing may be changed.

According to yet another advantageous aspect, the anchoring bracket is able to offer high positioning accuracy for timely and precise fastening of guides (or anchoring devices) to which the installation may then be mounted; furthermore, the anchoring bracket also allows any type of guide (or anchoring device) to be attached, a condition hitherto unthinkable with the fastening methods used in the prior art.

An additional advantage of the present anchoring bracket derives from its simple structure that avoids the need for all the complicated anchoring systems currently used.

A further advantage of the present invention is that it is remarkably easy to use, with simple implementation and good functionality.

Advantageously, the anchoring brackets may be inserted between the pair of corrugated sheets at regular intervals, and after being secured to the first and second sheets, the guides (or anchoring devices) are fastened on the second arms of the aforesaid brackets with clamping screws. In this way, should the clamping screws lose their tightness over time due to wear and tear of the gaskets, the infiltration water does not pass under the roofing, but remains external, ending up on the outer surface of the roofing.

The anchoring bracket has a housing pocket to accommodate the end portion of the first or second sheet and to promote the insertion of the bracket into the overlap area between the first and second sheet.

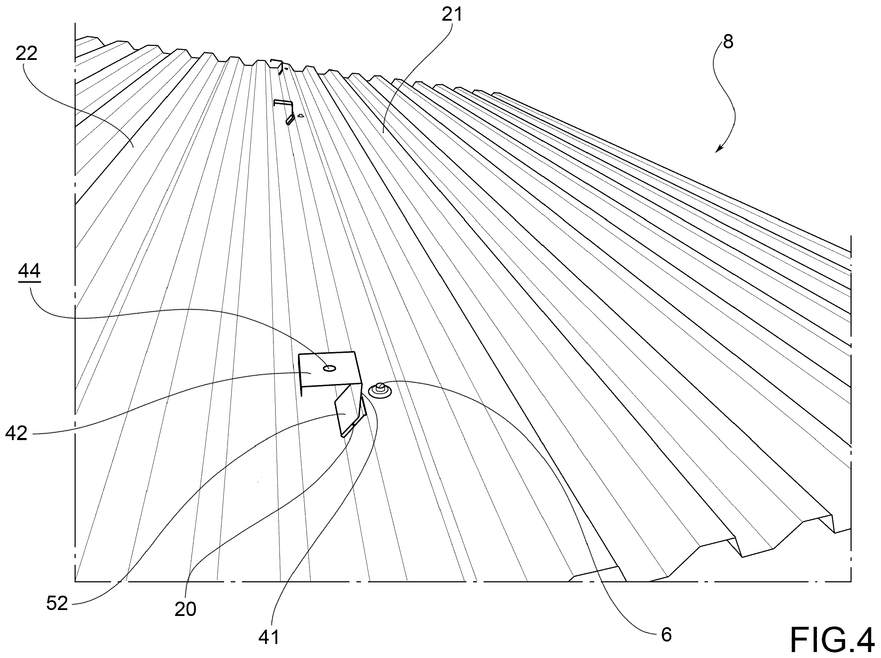

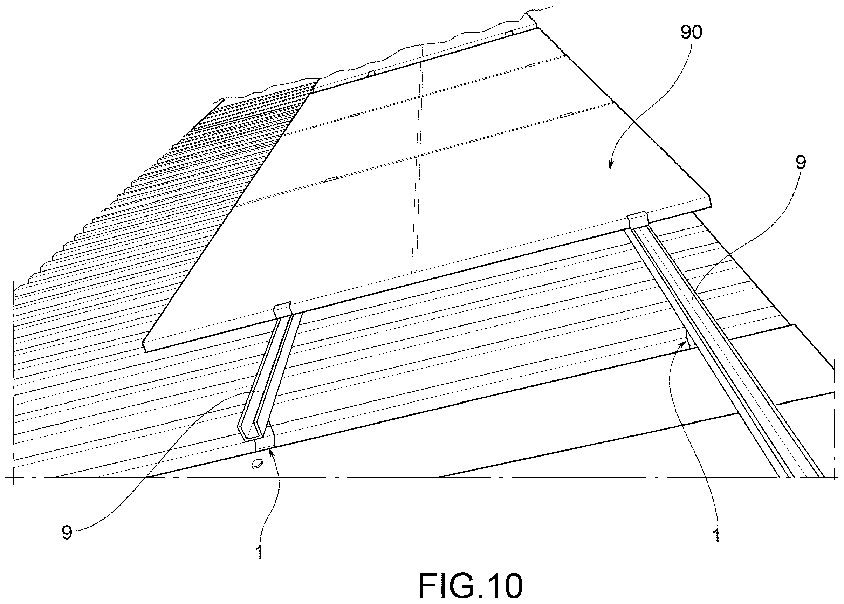

According to an advantageous aspect, the support group is extremely versatile, as the anchoring bracket is able to absorb the different thermal expansions/contractions of the pair of corrugated sheets and the guide. In particular, referring to Fig. 4, 9 and 10, the pair of corrugated sheets tends to expand/contract along the direction defined by the transverse axis of the bracket; on the other hand, the guide (Fig. 9-10) expands/contracts along the direction defined by the longitudinal axis of the anchoring bracket. The first arm, by spacing the pair of corrugated sheets away from the guide, is able to absorb both transverse stresses due to the corrugated sheets and longitudinal stresses due to the guide. The different stresses are caused by the fact that the corrugated sheets and the guide are orthogonal to each other and therefore expand/contract along different directions.

To the embodiments of the anchoring bracket, the support group, the mechanical machining group, the pressing method and the fastening method according to the invention, a person skilled in the art, in order to meet contingent needs, may make modifications, adaptations, and replacements of elements with functionally equivalent ones without departing from the scope of protection of the following claims. Each of the features described as belonging to a possible embodiment may be obtained independently of the other described embodiments.

## Claims

1. An anchoring bracket (1) for a roofing (2) comprising:
- a sheet engaging portion (3) suitable for being interposed between a pair of corrugated sheets (21, 22), said sheet engaging portion (3) further being suitable for being coupled and fastened to a first sheet (21) and a second sheet (22) of said pair of corrugated sheets (21, 22), for example by means of a mechanical connection and/or shape coupling and/or force coupling;
- an installation engaging portion (4) configured as a support suitable for fastening a guide (9) or an anchoring device on which to mount an installation (90), such as a photovoltaic system, an air conditioning system, a solar thermal system, a gangway, a scaffolding or any structure installable on the roofing (2);
- a connecting portion (5), wherein
said connecting portion (5) connects the sheet engaging portion (3) to the installation engaging portion (4), **characterized in that** said connecting portion (5) is folded so as to form a housing pocket (50) suitable for accommodating an end portion (20) of the first (21) or second (22) sheet.

2. Anchoring bracket (1) according to the preceding claim, wherein the housing pocket (50) has a pocket width (L) such as to allow the insertion with clearance of the end portion (20) of the first (21) or second (22) sheet into said housing pocket (50), preferably the pocket width (L) is between 0.5 and 25 mm.

3. Anchoring bracket (1) according to any one of the preceding claims, wherein the sheet engaging portion (3) comprises a plate-like element (30) connected to the connecting portion (5) and lying on a roofing coupling plane (Pc), said plate-like element (30) being suitable for being interposed between the first (21) and the second (22) sheets so that, by inserting the anchoring bracket (1) between the pair of corrugated sheets (21, 22), the weight of the overlying first sheet (21) limits the movement of the anchoring bracket (1) with respect to the underlying second sheet (22).

4. Anchoring bracket (1) according to any one of the preceding claims, where a sheet engaging hole (31) is obtained on the sheet engaging portion (3), wherein, when the anchoring bracket (1) is inserted between the pair of corrugated sheets (21, 22), said sheet engaging hole (31) is suitable for being coaxially aligned with a first coupling hole (210) and a second coupling hole (220) respectively obtained on the first sheet (21) and the second sheet (22),
the anchoring bracket (1) being suitable for being secured to the pair of corrugated sheets (21, 22) by at least one screw (6) engageable with the sheet engaging hole (31) and with said first coupling hole (210) and second coupling hole (220).

5. Anchoring bracket (1) according to any one of the preceding claims, wherein the sheet engaging portion (3) and the connecting portion (5) form a trapezoidal profile, where the connecting portion (5) coincides with an inclined section and the sheet engaging portion (3) coincides with a horizontal section of the trapezoidal profile, said trapezoidal profile being further suitable for defining a shape coupling with the pair of corrugated sheets (21, 22).

6. Anchoring bracket (1) according to any one of the preceding claims, wherein the installation engaging portion (4) comprises a support element (40) in the shape of an overturned "L", said support element (40) comprising a first arm (41) connected to the connecting portion (5), and a second arm (42) orthogonally connected to said first arm (41) so as to be arranged parallel to the sheet engaging portion (3), wherein
the second arm (42) extends on the opposite side with respect to the sheet engaging portion (3), and wherein
the second arm (42) is configured as a fastening plate for the guide (9) or the anchoring device on which the installation (90) is mountable.

7. Anchoring bracket (1) according to any one of the preceding claims, wherein the installation engaging portion (4) comprises, at the free end, an edge (43) orthogonally folded to stiffen the anchoring bracket (1) and promote the grip of said anchoring bracket (1) by an operator.

8. Anchoring bracket (1) according to any one of the preceding claims, where an installation engaging hole (44) is obtained on the installation engaging portion (4), suitable for being engageable by a clamping screw (7) for fastening either the guide (9) or the anchoring device on which the installation (90) is mountable, to the bracket (1).

9. Anchoring bracket (1) according to any one of the preceding claims, usable with any corrugated sheet configuration and made with profiles of metal material, preferably sheet metal.

10. Anchoring bracket (1) according to any one of the preceding claims, painted in any color to adapt esthetically or blend in with the roofing (2) or the installation (90) to be supported.

11. Anchoring bracket (1) according to any one of the preceding claims, made in one piece or obtained as a single piece, i.e. obtained by joining a plurality of pieces coupled together seamlessly.

12. A support group (8) comprising a pair of corrugated sheets (21, 22), an anchoring bracket (1) according to any one of the preceding claims and at least one screw (6) engaged with a sheet engaging hole (31) obtained on the sheet engaging portion (3), with a first coupling hole (210) obtained on a first sheet (21), and with a second coupling hole (220) obtained on a second sheet (22).

13. A mechanical machining group for making an anchoring bracket (1) according to any one of claims 1 to 11, comprising:
- a cutting and bending station (110) suitable for cutting a metal sheet (10) having a main extension along a longitudinal axis (L), so as to obtain a desired longitudinal length, said cutting and bending station (110) further comprising a deformation punch (115) suitable for bending a free end of the metal sheet (10), so as to obtain an edge (43) orthogonally folded with respect to the longitudinal axis (L);
- a deformation unit (120) to give the metal sheet (10) the final shape of the anchoring bracket (1), said deformation unit (120) comprising a first station (121), a second station (122) and a third station (123), said first station (121) comprising:
- a first die (131) suitable for acting as a support for the metal sheet (10);
- a counter-flange (125) suitable for acting as an abutment surface for the folded edge (43);
- a first punch (141) shaped to deform the metal sheet (10) so as to obtain a pilot bend (50') in a connecting portion (5) and a simultaneous bend in an installation engaging portion (4) so as to define a first arm (41) and a second arm (42) and give said installation engaging portion (4) an overturned "L" shape;
the second station (122) comprising a second punch (142) suitable for accentuating the pilot bend (50') to obtain a semi-machined pocket defined by a pair of walls (51, 52) facing each other;
the third station (123) comprising a third punch (143) suitable for compressing the semi-machined pocket so as to obtain a housing pocket (50).

14. Mechanical machining group according to the preceding claim, wherein the first station (121), second station (122) and third station (123) of the deformation unit (120) are positioned in sequence alongside one another, so that the same operator may monitor the plastic deformation process to give the metal sheet (10) the final shape of the anchoring bracket (1).

15. Mechanical machining group according to any one of claims 13 to 14, wherein the cutting and bending station (110) and the deformation unit (120) are engaged and made integral with each other.

16. A pressing method for making an anchoring bracket (1) according to any one of claims 1 to 11, comprising the following steps:
- providing a mechanical machining group according to any one of claims 13 to 15;
- providing a metal sheet (10) having a main extension along a longitudinal axis (L) and having a transverse width, measured along a transverse axis (T) orthogonal to the longitudinal axis (L), coinciding with the final width of the anchoring bracket (1);
- cutting the metal sheet (10) so as to obtain a desired longitudinal length and bending a free end of the metal sheet (10), so as to obtain an edge (43) orthogonally folded with respect to the longitudinal axis (L);
- deforming the metal sheet (10) so as to obtain a pilot bend (50') in a connecting portion (5) and a simultaneous bend in an installation engaging portion (4) so as to define a first arm (41) and a second arm (42) and give said installation engaging portion (4) an overturned "L" shape;
- further deforming the pilot bend (50') so as to accentuate the bend and obtain a semi-machined pocket defined by a pair of walls (51, 52) facing each other;
- compressing the semi-machined pocket so as to obtain a housing pocket (50), wherein the distance between the pair of walls (51, 52) is such as to make the housing pocket (50) suitable for accommodating an end portion (20) of a first sheet (21) or a second sheet (22).

17. A method for fastening a guide (9) or an anchoring device to a roofing (2), comprising the steps of:
- providing a support group (8) according to claim 12, wherein the first sheet (21) and second sheet (22) of the pair of corrugated sheets (21, 22) are at least partially overlapping each other;
- inserting the anchoring bracket (1) between the first (21) and second (22) sheets;
- fastening the anchoring bracket (1) to the pair of corrugated sheets (21, 22) by at least one screw (6) engaged with the sheet engaging hole (31) and with the first coupling hole (210) and second coupling hole (220);
- fastening the guide (9), or the anchoring device, to the installation engaging portion (4).

18. Fastening method according to the preceding claim, further comprising the step of mounting on the guide (9), or on the anchoring device, an installation (90), such as a photovoltaic system, an air conditioning system, a solar thermal plant, a gangway, a scaffolding or any structure installable on the roofing (2).

## Patentansprüche

1. Verankerungshalterung (1) für eine Bedachung (2), umfassend:
- einen Blecheingriffsabschnitt (3), der geeignet ist, zwischen einem Paar Wellbleche (21, 22) angeordnet zu werden, wobei der Blecheingriffsabschnitt (3) ferner geeignet ist, mit einem ersten Blech (21) und einem zweiten Blech (22) des Paars Wellbleche (21, 22) gekoppelt und befestigt zu werden, beispielsweise mittels einer mechanischen Verbindung und/oder Formkopplung und/oder Kraftkopplung;
- einen Installationseingriffsabschnitt (4), der als eine Stütze bzw. ein Träger konfiguriert ist, die bzw. der zum Befestigen einer Führung (9) oder einer Verankerungsvorrichtung geeignet ist, an der eine Installation (90) wie beispielsweise ein Photovoltaiksystem, ein Klimaanlagensystem, ein Solarthermiesystem, eine Laufbrücke, ein Gerüst oder eine andere an der Bedachung (2) installierbare Struktur zu montieren ist;
- einen Verbindungsabschnitt (5), wobei der Verbindungsabschnitt (5) den Blecheingriffsabschnitt (3) mit dem Installationseingriffsabschnitt (4) verbindet,
**dadurch gekennzeichnet, dass** der Verbindungsabschnitt (5) so gefaltet bzw. angekantet ist, dass er eine Aufnahmetasche (50) bildet, die geeignet ist, einen Endabschnitt (20) des ersten (21) oder des zweiten (22) Blechs unterzubringen.

2. Verankerungshalterung (1) nach dem vorhergehenden Anspruch, wobei die Aufnahmetasche (50) eine Taschenbreite (L) aufweist, die das Einsetzen des Endabschnitts (20) des ersten (21) oder des zweiten (22) Blechs mit Spiel in die Aufnahmetasche (50) ermöglicht, wobei vorzugsweise die Taschenbreite (L) zwischen 0,5 und 25 mm beträgt.

3. Verankerungshalterung (1) nach einem der vorhergehenden Ansprüche, wobei der Blecheingriffsabschnitt (3) ein plattenartiges Element (30) umfasst, das mit dem Verbindungsabschnitt (5) verbunden ist und auf einer Bedachungskopplungsebene (Pc) liegt, wobei das plattenartige Element (30) geeignet ist, zwischen dem ersten (21) und dem zweiten (22) Blech angeordnet zu werden, so dass durch Einsetzen der Verankerungshalterung (1) zwischen das Paar Wellbleche (21, 22) das Gewicht des darüber liegenden ersten Blechs (21) die Bewegung der Verankerungshalterung (1) in Bezug auf das darunter liegende zweite Blech (22) begrenzt.

4. Verankerungshalterung (1) nach einem der vorhergehenden Ansprüche, wobei ein Blecheingriffsloch (31) an dem Blecheingriffsabschnitt (3) erhalten bzw. vorhanden ist, wobei wenn die Verankerungshalterung (1) zwischen das Paar Wellbleche (21, 22) eingesetzt wird, das Eingriffsloch (31) geeignet ist, koaxial mit einem ersten Kopplungsloch (210) und einem zweiten Kopplungsloch (220) ausgerichtet zu werden, die jeweils an dem ersten (21) und dem zweiten Blech (22) erhalten bzw. vorhanden sind,
wobei die Verankerungshalterung (1) geeignet ist, an dem Paar Wellbleche (21, 22) gesichert bzw. befestigt zu werden, und zwar durch zumindest eine Schraube (6), die mit dem Blecheingriffsloch (31) und mit dem ersten Kopplungsloch (210) und dem zweiten Kopplungsloch (220) in Eingriff bringbar ist.

5. Verankerungshalterung (1) nach einem der vorhergehenden Ansprüche, wobei der Blecheingriffsabschnitt (3) und der Verbindungsabschnitt (5) ein Trapezprofil bilden, wo der Verbindungsabschnitt (5) mit einer geneigten Sektion übereinstimmt und der Blecheingriffsabschnitt (3) mit einer horizontalen Sektion des Trapezprofils übereinstimmt, wobei das Trapezprofil ferner geeignet ist, eine Formkopplung mit dem Paar Wellbleche (21, 22) zu definieren.

6. Verankerungshalterung (1) nach einem der vorhergehenden Ansprüche, wobei der Installationseingriffsabschnitt (4) ein Stütz- bzw. Trägerelement (40) in der Form eines umgedrehten "L" umfasst, wobei das Stützelement (40) einen ersten Arm (41), der mit dem Verbindungsabschnitt (5) verbunden ist, und einen zweiten Arm (42) umfasst, der orthogonal mit dem ersten Arm (41) verbunden ist, um parallel zu dem Blecheingriffsabschnitt (3) angeordnet zu sein, wobei sich der zweite Arm (42) auf der gegenüberliegenden bzw.
entgegengengesetzten Seite in Bezug auf den Blecheingriffsabschnitt (3) erstreckt und wobei
der zweite Arm (42) als eine Befestigungsplatte für die Führung (9) oder die Verankerungsvorrichtung konfiguriert ist, an der die Installation (90) montierbar ist.

7. Verankerungshalterung (1) nach einem der vorhergehenden Ansprüche, wobei der Installationseingriffsabschnitt (4) an dem freien Ende eine Kante (43) umfasst, die orthogonal gefaltet bzw. abgekantet ist, um die Verankerungshalterung (1) zu versteifen und den Halt der Verankerungshalterung (1) durch eine Bedienperson zu begünstigen.

8. Verankerungshalterung (1) nach einem der vorhergehenden Ansprüche, wobei ein Installationseingriffsloch (44) an dem Installationseingriffsabschnitt (4) erhalten bzw. vorhanden ist, das geeignet ist, durch eine Klemmschraube (7) in Eingriff genommen zu werden, um entweder die Führung (9) oder die Verankerungsvorrichtung, an der die Installation (90) montierbar ist, an der Halterung (1) zu befestigen.

9. Verankerungshalterung (1) nach einem der vorhergehenden Ansprüche, verwendbar mit einer beliebigen Wellblechkonfiguration und hergestellt mit Profilen aus Metallmaterial, vorzugsweise Metallblech.

10. Verankerungshalterung (1) nach einem der vorhergehenden Ansprüche, lackiert in einer beliebigen Farbe, um sich ästhetisch an die zu stützende Bedachung (2) oder die Installation (90) anzupassen oder in diese einzufügen.

11. Verankerungshalterung (1) nach einem der vorhergehenden Ansprüche, hergestellt in einem Stück oder als ein einzelnes Stück erhalten, d.h. erhalten durch Zusammenfügen einer Mehrzahl von Stücken, die nahtlos zusammengekoppelt werden.

12. Stütz- bzw. Trägergruppe (8), umfassend ein Paar Wellbleche (21, 22), eine Verankerungshalterung (1) nach einem der vorhergehenden Ansprüche und zumindest eine Schraube (6), die mit einem Blechaufnahmeloch (31) in Eingriff ist, die an dem Blecheingriffsabschnitt (3) erhalten bzw. vorhanden ist, wobei ein erstes Kopplungsloch (210) an einem ersten Blech (21) erhalten bzw. vorhanden ist und ein zweites Kopplungsloch (220) an einem zweiten Blech (22) erhalten bzw. vorhanden ist.

13. Mechanische Bearbeitungsgruppe zum Herstellen einer Verankerungshalterung (1) nach einem der Ansprüche 1 bis 11, umfassend:
- eine Schneid- und Biegestation (110), die geeignet ist, ein Metallblech (10) mit einer Haupterstreckung entlang einer Längsachse (L) zu schneiden, um eine gewünschte Länge zu erhalten, wobei die Schneid- und Biegestation (110) ferner einen Verformungsstempel (115) umfasst, der geeignet ist, ein freies Ende des Metallblechs (10) zu biegen, um eine Kante (43) zu erhalten, die in Bezug auf die Längsachse (L) orthogonal gefaltet bzw. abgekantet ist;
- eine Verformungseinheit (120), um dem Metallblech (10) die endgültige Form der Verankerungshalterung (1) zu geben, wobei die Verformungseinheit (120) eine erste Station (121), eine zweite Station (122) und eine dritte Station (123) umfasst, wobei die erste Station (121) umfasst:
- eine erste Matrize (131), die geeignet ist, als eine Stütze für das Metallblech (10) zu wirken;
- einen Gegenflansch (125), der geeignet ist, als eine Anlagefläche bzw. -oberfläche für die gefaltete Kante (43) zu wirken;
- einen ersten Stempel (141), der so geformt ist, dass er das Metallblech (10) verformt, um eine Vorbiegung (50') in einem Verbindungsabschnitt (5) und eine gleichzeitige Biegung in einem Installationseingriffsabschnitt (4) zu erhalten, um einen ersten Arm (41) und einen zweiten Arm (42) zu definieren und dem Installationseingriffsabschnitt (4) die Form eines umgedrehten "L" zu geben;
wobei die zweite Station (122) einen zweiten Stempel (142) umfasst, der geeignet ist, die Vorbiegung (50') zu betonen bzw. zu verstärken, um eine halbfertig bearbeitete Tasche zu erhalten, die durch ein Paar Wände (51, 52) definiert ist, die einander zugewandt sind;
wobei die dritte Station (123) einen dritten Stempel (143) umfasst, der geeignet ist, die halbfertig bearbeitete Tasche zusammenzudrücken, um eine Aufnahmetasche (50) zu erhalten.

14. Mechanische Bearbeitungsgruppe nach dem vorhergehenden Anspruch, wobei die erste Station (121), die zweite Station (122) und die dritte Station (123) der Verformungseinheit (120) der Reihe nach entlang einander positioniert sind, so dass dieselbe Bedienperson den plastischen Verformungsprozess überwachen kann, um dem Metallblech (10) die endgültige Form der Verankerungshalterung (1) zu geben.

15. Mechanische Bearbeitungsgruppe nach einem der Ansprüche 13 bis 14, wobei die Schneid- und Biegestation (110) und die Verformungseinheit (120) in Eingriff sind und integral miteinander hergestellt sind.

16. Pressverfahren zum Herstellen einer Verankerungshalterung (1) nach einem der Ansprüche 1 bis 11, umfassend die folgenden Schritte:
- Bereitstellen einer mechanischen Bearbeitungsgruppe nach einem der Ansprüche 13 bis 15;
- Bereitstellen eines Metallblechs (10) mit einer Haupterstreckung entlang einer Längsachse (L) und einer Querbreite, gemessen entlang einer Querachse (T) orthogonal zu der Längsachse (L), die mit der endgültigen Breite der Verankerungshalterung (1) übereinstimmt;
- Schneiden des Metallblechs (10), um eine gewünschte Längslänge zu erhalten, und Biegen eines freien Endes des Metallblechs (10), um eine Kante (43) zu erhalten, die orthogonal in Bezug auf die Längsachse (L) gefaltet bzw. abgekantet ist;
- Verformen des Metallblechs (10), um eine Vorbiegung (50') in einem Verbindungsabschnitt (5) und eine gleichzeitige Biegung in einem Installationseingriffsabschnitt (4) zu erhalten, um einen ersten Arm (41) und einen zweiten Arm (42) zu definieren und dem Installationseingriffsabschnitt (4) die Form eines umgedrehten "L" zu geben;
- ferner Verformen der Vorbiegung (50'), um die Biegung zu betonen bzw. zu verstärken und eine halbfertig bearbeitete Tasche zu erhalten, die durch ein Paar Wände (51, 52) definiert ist, die einander zugewandt sind;
- Zusammendrücken der halbfertig bearbeiteten Tasche, um eine Aufnahmetasche (50) zu erhalten, wobei der Abstand zwischen dem Paar Wände (51, 52) so ist, dass die Aufnahmetasche (50) für ein Unterbringen eines Endabschnitts (20) eines ersten Blechs (21) oder eines zweiten Blechs (22) geeignet gemacht wird.

17. Verfahren zum Befestigen einer Führung (9) oder einer Verankerungsvorrichtung an einer Bedachung (2), umfassend die Schritte:
- Bereitstellen einer Stütz- bzw. Trägergruppe (8) nach Anspruch 12, wobei das erste Blech (21) und das zweite Blech (22) des Paars Wellbleche (21, 22) zumindest teilweise einander überlappen;
- Einsetzen der Verankerungshalterung (1) zwischen das erste (21) und das zweite (22) Blech;
- Befestigen der Verankerungshalterung (1) an dem Paar Wellbleche (21, 22) durch zumindest eine Schraube (6), die mit dem Blecheingriffsloch (31) und mit dem ersten Kopplungsloch (210) und dem zweiten Kopplungsloch (220) in Eingriff ist;
- Befestigen der Führung (9), oder der Verankerungsvorrichtung, an dem Installationseingriffsabschnitt (4).

18. Befestigungsverfahren nach dem vorhergehenden Anspruch, ferner umfassend den Schritt eines Montierens, an der Führung (9) oder an der Verankerungsvorrichtung, einer Installation (90), wie beispielsweise ein Photovoltaiksystem, ein Klimaanlagensystem, ein Solarthermiesystem, eine Laufbrücke, ein Gerüst oder eine andere an der Bedachung (2) installierbare Struktur.

## Revendications

1. Support d'ancrage (1) pour une toiture (2), comprenant :
- une partie d'engagement de tôle (3) adaptée pour être interposée entre une paire de tôles ondulées (21, 22), ladite partie d'engagement de tôle (3) étant en outre adaptée pour être reliée et fixée à une première tôle (21) et une deuxième tôle (22) d'une paire de tôles ondulées (21, 22), par exemple moyennant une connexion mécanique et/ou une connexion de forme et/ou une connexion de force ;
- une partie d'engagement d'installation (4) configurée comme un support adapté pour monter un guide (9) ou un dispositif d'ancrage sur lequel une installation (90) telle qu'un système photovoltaïque, un système de climatisation d'air, un système de chaleur solaire, une passerelle, un échafaudage ou toute autre structure pouvant être montée sur la toiture (2) doit être montée ;
- une partie de connexion (5) dans laquelle ladite partie de connexion (5) relie la partie d'engagement de tôle (3) à la partie d'engagement d'installation (4),
**caractérisé en ce que** ladite partie de connexion (5) est pliée de façon à former une poche de logement (50) adaptée pour loger une partie d'extrémité (20) de la première (21) ou deuxième (22) tôle.

2. Support d'ancrage (1) selon la revendication précédente, dans lequel la poche de logement (50) a une largeur de poche (L) telle à permettre l'insertion avec jeu de la partie d'extrémité (20) de la première (21) ou deuxième (22) tôle dans ladite poche de logement (50), de préférence, la largeur de poche (L) étant entre 0,5 et 25 mm.

3. Support d'ancrage (1) selon l'une des revendications précédentes, dans lequel la partie d'engagement de tôle (3) comprend un élément (30) ressemblant à une plaque, connecté à la partie de connexion (5) et situé sur un plan (Pc) de connexion de toiture, l'élément (30) ressemblant à une plaque étant adapté pour être interposé entre la première (21) et la deuxième (22) tôle de façon que, en insérant le support d'ancrage (1) entre la paire de tôle ondulées (21, 22), le poids de la première tôle (21) supérieure limite le mouvement du support d'ancrage (1) par rapport à la tôle (22) inférieure.

4. Support d'ancrage (1) selon l'une des revendications précédentes, où un trou d'engagement de tôle (31) est obtenu sur la partie d'engagement de tôle (3), dans lequel, lorsque le support d'ancrage (1) est inséré entre la paire de tôles ondulées (21, 22), ledit trou d'engagement de tôle (31) est adapté pour être aligné coaxialement avec un premier trou de fixation (210) et un deuxième trou de fixation (220) obtenus respectivement sur la première tôle (21) et la deuxième tôle (22),
le support d'ancrage (1) étant adapté pour être fixé sur la paire de tôles ondulées (21, 22) par au moins une vis (6) pouvant être introduite dans le trou d'engagement de tôle (31) et dans lesdits premier trous de fixation (210) et deuxième trou de fixation (220).

5. Support d'ancrage (1) selon l'une des revendications précédentes, dans lequel la partie d'engagement de tôle (3) et la partie de connexion (5) forment un profil trapézoïdal où la partie de connexion (5) coïncide avec une partie inclinée et la partie d'engagement de tôle (3) coïncide avec une partie horizontale du profil trapézoïdal, ledit profil trapézoïdal étant en outre adapté pour définir un couplage de forme avec la paire de tôles ondulées (21, 22).

6. Support d'ancrage (1) selon l'une des revendications précédentes, dans lequel la partie d'engagement d'installation (4) comprend un élément de support (40) sous la forme d'un «L» exagéré, l'élément de support (40) comprenant un premier bras (41) relié à la partie de connexion (5) et un deuxième bras (42) relié perpendiculairement au premier bras (41) afin d'être agencé parallèlement à la partie d'engagement e tôle (3), dans lequel
le deuxième bras (42) s'étend sur le côté opposé par rapport à la partie d'engagement de tôle (3) et dans lequel le deuxième bras (42) est configuré comme une plaque de fixation pour le guide (9) ou le dispositif d'ancrage sur lequel l'installation (90) peut être monté.

7. Support d'ancrage (1) selon l'une des revendications précédentes, dans lequel la partie d'engagement d'installation (4) comprend à l'extrémité libre un bord (43) plié rectangulairement pour rigidifier le support d'ancrage (1) et améliorer la saisie dudit support d'ancrage (1) par un opérateur.

8. Support d'ancrage (1) selon l'une des revendications précédentes, où un trou d'engagement d'installation (44) est obtenu dans la partie d'engagement d'installation (4), adapté pour être traversé par un vis de serrage (7) pour fixer soit le guide (9) soit le dispositif d'ancrage sur lequel l'installation (90) peut être fixé, sur le support (1).

9. Support d'ancrage (1) selon l'une des revendications précédentes, utilisable avec toute configuration de tôle ondulée et réalisé avec des profilés de matériau métallique, de préférence de métal en feuille.

10. Support d'ancrage (1) selon l'une des revendications précédentes, peint en toute couleur pour s'adapter esthétiquement ou s'intégrer dans la toiture (2) ou l'installation (90) à supporter.

11. Support d'ancrage (1) selon l'une des revendications précédentes, réalisé en une seule pièce ou obtenu comme une seule pièce, c'est-à-dire obtenu en joignant une pluralité de pièces assemblées sans interruption.

12. Groupe de support (8) comprenant une paire de tôles ondulées (21, 22), un support d'ancrage (1) selon l'une des revendications précédentes et au moins une vis (6) engagée dans un trou d'engagement de tôle (31) obtenu sur la partie d'engagement de tôle (3), avec un premier trou d'accouplement (210) obtenu sur une première tôle (21) et avec un deuxième trou d'accouplement (220) obtenu sur une deuxième tôle (22).

13. Groupe de travail mécanique pour faire un support d'ancrage (1) selon l'une des revendications 1 à 11, comprenant :
- une station de coupe et de pliage (110) adaptée pour couper une tôle (10) ayant une extension principale le long d'un axe longitudinal (L) afin d'obtenir une longueur souhaitée, ladite station de coupe et de pliage (110) comprenant en outre un poinçon de déformation (115) adapté pour plier une extrémité libre de la tôle (10) afin d'obtenir un bord (43) perpendiculairement plié par rapport à l'axe longitudinal (L) ;
- une station de déformation (120) pour donner à la tôle (10) la forme finale du support d'ancrage (1), ladite unité de déformation (120) comprenant une première station (121), une deuxième station (122) et une troisième station (123), ladite première station (121) comprenant :
- un premier moule (131) adapté pour agir comme un support pour la tôle (10) ;
- une contre-bride (125) adaptée pour agir comme une surface d'appui pour le bord plié (43) ;
- un premier poinçon (141) formé pour déformer la tôle (10) afin d'obtenir un pli pilote (50') dans une partie de liaison (5) et un pli simultané dans une partie d'engagement d'installation (4) afin de définir un premier bras (41) et un deuxième bras (42) et de donner à ladite partie d'engagement d'installation (4) la forme d'un «L» renversé ;
la deuxième station (122) comprenant un deuxième poinçon (142) adapté pour augmenter le pli pilote (50') pour obtenir une poche partiellement usinée définie par une paire de parois (51, 52) en regard l'une de l'autre ;
la troisième station (123) comprenant un troisième poinçon (143) adapté pour comprimer la poche partiellement usinée afin d'obtenir une poche de logement (50).

14. Groupe de travail mécanique selon la revendication précédente, dans lequel la première station (121), la deuxième station (122) et la troisième station (123) de l'unité de déformation (120) sont positionnées en série l'une à côté de l'autre de façon que le même opérateur puisse suivre le procès de déformation plastique pour donner à la tôle (10) la forme finale du support d'ancrage (1).

15. Groupe de travail mécanique selon l'une des revendications 13 à 14, dans lequel la station de coupe et de pliage (110) et l'unité de déformation (120) sont reliées et assemblées l'une à l'autre.

16. Procédé de pressage pour fabriquer un support d'ancrage (1) selon l'une des revendications 1 à 11, comprenant les étapes suivantes :
- pourvoir un groupe de travail mécanique selon l'une des revendications 13 à 15 ;
- pourvoir une tôle (10) ayant une extension principale le long d'un axe longitudinal (L) et ayant une largeur transversale mesurée le long d'un axe transversal (T) perpendiculaire à l'axe longitudinal (L), coïncidant avec la largeur finale du support d'ancrage (1) ;
- couper la tôle (10) afin d'obtenir une longueur longitudinale souhaitée et plier une extrémité libre de la tôle (10) afin d'obtenir un bord (43) plié perpendiculairement par rapport à l'axe longitudinal (L) ;
- déformer la tôle (10) afin d'obtenir un pli pilote (50') dans une partie de connexion (5) et un pli simultané dans une partie d'engagement d'installation (4) afin de définir un premier bras (41) et un deuxième bas (42) et de donner à ladite partie d'engagement d'installation (4) une forme de «L» exagéré ;
- déformer davantage le pli pilote (50') afin d'accentuer le pli et d'obtenir une poche semi-finie définie par une paire de parois (51, 52) l'une en regard de l'autre ;
- comprimer la poche semi-finie afin d'obtenir une poche de logement (50), dans lequel la distance entre la paire de parois (51, 52) est de façon que la poche de logement (50) soit adaptée pour loger une partie d'extrémité (20) d'une première tôle (21) ou d'une deuxième tôle (22).

17. Procédé pour fixer un guide (9) ou un dispositif d'ancrage sur une toiture (2), comprenant les étapes de :
- pourvoir un groupe de support (8) selon la revendication 12, dans lequel la première tôle (21) et la deuxième tôle (22) de la paire de tôles ondulées (21, 22) se chevauchent au moins partiellement ;
- insérer le support d'ancrage (1) entre les première (21) et deuxième (22) tôles ;
- fixer le support d'ancrage (1) à la paire de tôles ondulées (21, 22) par au moins une vis (6) engagée dans le trou d'engagement de tôle (31) et dans le premier trou de fixation (210) et le deuxième trou de fixation (220) ;
- fixer le guide (9) ou le dispositif d'ancrage sur la partie d'engagement d'installation (4).

18. Procédé de fixation selon la revendication précédente, comprenant en outre l'étape de monter sur le guide (9) ou sur le dispositif d'ancrage une installation (90) telle qu'un système photovoltaïque, un système de climatisation, une usine thermale solaire, un passage, un échafaudage ou toute structure pouvant être installée sur la toiture (2).
